(19) **Europäisches Patentamt / European Patent Office / Office européen des brevets**

(11) **EP 0 967 578 B1**

(12) **EUROPEAN PATENT SPECIFICATION**

(45) Date of publication and mention
of the grant of the patent:
**16.05.2007 Bulletin 2007/20**

(51) Int Cl.:
*G06T 15/00* (2006.01)     *G06T 11/00* (2006.01)

(21) Application number: **99105844.7**

(22) Date of filing: **23.03.1999**

(54) **Object rendering system to produce X-ray-like images**

Objektwiedergabesystem zur Erzeugung röntgenähnlicher Bilder

Système de rendu d'object pour produire des images de type rayons-x

(84) Designated Contracting States:
**AT BE CH CY DE DK ES FI FR GB GR IE IT LI LU MC NL PT SE**

(30) Priority: **22.06.1998 US 102260**

(43) Date of publication of application:
**29.12.1999 Bulletin 1999/52**

(73) Proprietor: **MITSUBISHI DENKI KABUSHIKI KAISHA**
**Chiyoda-ku**
**Tokyo 100-8310 (JP)**

(72) Inventor: **Walterman, Michael Thomas**
**Framingham,**
**Massachusetts 01701 (US)**

(74) Representative: **Pfenning, Meinig & Partner GbR**
**Patent- und Rechtsanwälte**
**Theresienhöhe 13**
**80339 München (DE)**

(56) References cited:
**US-A- 4 920 491**

• LACROIX K J ET AL: "Investigation of the use of X-ray CT images for attenuation compensation in SPECT" 1993 NUCLEAR SCIENCE SYMPOSIUM AND MEDICAL IMAGING CONFERENCE (NSS-MIC '93), SAN FRANCISCO, CA, USA, 30 OCT.-6 NOV. 1993, vol. 41, no. 6, pt.2, pages 2793-2799, XP002158164 IEEE Transactions on Nuclear Science, Dec. 1994, USA ISSN: 0018-9499

• ZHENGRONG LIANG ET AL: "Validation of the central-ray approximation for attenuated depth-dependent convolution in quantitative SPECT reconstruction" PHYSICS IN MEDICINE AND BIOLOGY, FEB. 1997, IOP PUBLISHING, UK, vol. 42, no. 2, pages 433-439, XP000978641 ISSN: 0031-9155

• VAN WALSUM T ET AL: "CT-based simulation of fluoroscopy and DSA for endovascular surgery training" CVRMED-MRCAS '97. FIRST JOINT CONFERENCE, COMPUTER VISION, VIRTUAL REALITY AND ROBOTICS IN MEDICINE AND MEDICAL ROBOTICS AND COMPUTER-ASSISTED SURGERY PROCEEDINGS, CVRMED-MRCAS'97. FIRST JOINT CONFERENCE COMPUTER VISION, VIRTUAL REALITY AND ROBOTICS , pages 273-282, XP000981218 1997, Berlin, Germany, Springer-Verlag, Germany ISBN: 3-540-62734-0

EP 0 967 578 B1

**Description**

BACKGROUND OF THE INVENTION

The standard methods of rendering synthetic X-Ray images uses voxel based rendering. In this methodology, each object is composed of small solid elements called voxels. The voxels are then Ray traced to generate the rendered image. There are two limitations to this process. First, the number of voxels required to approximate an object can be very large. This poses a problem to most computer graphics systems in that such large amounts of data can not be processed quickly enough for some applications. Second, voxels define inflexible objects in that they can not change shape. It an object's global geometry changes, "voxelation", or the describing of the new global geometry in terms of a new collection of voxels can be computationally expensive and algorithmically complex.

US-A-4920491 discloses the improvement of the quality of non-destructive examination images by using a CAD model of the investigated part. An electronic model of the part is provided from a three-dimensional solid modeller and the X-Ray attenuation for X-Rays projected through the part is calculated using physical parameters of the model.

Also known from prior art (Van Walsum T. et al.: "CT-based Simulation of Fluoroscopy and DSA for Endovascular Surgery Training", CVRMED-MRCAS, 1997: First Joint Conference, Computer Vision, Virtual Reality and Robotics, pp. 273-282, 1997) is a method of fluoroscopy simulation for an endovascular surgery training system. Fluoroscopic and DSA images are generated by simulating the X-ray process using CT data. Separate data sets are generated for bone, soft tissue and vessels and a simulated X-ray image is generated for each of these datasets. In a rendering stage, these intermediate images are warped, filtered and blended to obtain a simulated fluoroscopic or DSA image.

SUMMARY OF THE INVENTION

In order to provide a simpler and less computationally intense system for rendering objects so as to simulate X-Ray image formation, the subject system converts non-voxel object data to data which is presentable in an X-Ray format by simulating passing X-Rays through an object, simulating the attenuation and considering the object to be one of material embedded within material, e.g. boundaries within boundaries, surfaces within surfaces, or shells within shells.

In order to accomplish the rendering, it has been found that an object may be decomposed into a number of solids which can be considered to be nested one inside the other. These solids, in general, are bounded by surfaces which are detectable through the utilization of a ray which passes into and out of the solid. These surfaces can be located in terms of the simulated passing of a photon beam which is attenuated by the solid as it passes through. Thus, a surface of the solid can be obtained through traditional computer graphics descriptions which in one embodiment utilizes vectors in a graphics space having a direction corresponding to the direction of a given group of photons and a magnitude corresponding to the number of unattenuated photons.

The subject system thus takes a solid and decomposes it into a number of nested solids. The purpose of this nesting is to be able to obtain predetermined features of the solid at interior locations defined by the above nestings. It will be appreciated that the determination of nested surfaces or boundaries is considerably less complex than defining each interior element of a solid by a voxel.

The surfaces of the solids are modeled by standard 3D visual modeling packages to create the nested boundaries. The interior of each solid is assigned a mass-attenuation coefficient based on its real-world value and the mass-attenuation coefficient of the solid that encloses that boundary. These models are then registered in a 3D coordinate system that includes the photon emitter and imaging surface via a scene graph which relates all the objects in the scene.

Thereafter, the data in the scene graph is rendered in a manner which approximates the images one would obtain when passing X-Rays through an object. More particularly, the subject system provides an X-Ray like image through the use of 3D models of an object, a simulated photon emission through the object, and all of its nested solids, and detected by a simulated X-Ray camera which outputs an image.

The 3D models, in one embodiment, are hand done based on an expert's knowledge of the solid to be modeled. For instance, a surgeon may wish to specify the inner layers of a heart by specifying tissue densities for the myocardium and boundaries for various heart chambers. Alternatively, the data set for the 3D model may be obtained from CT scans, and the resulting voxelized data. This is advantageous assuming one can reduce many similar and adjacent voxels into a single solid. As a result, the rendering process for producing an image of the solids in all of its nested layers or surfaces can be accomplished with substantially less data, and similarly reduced processing.

The above permits real-time animation of the solids/volumes by altering surface geometry as opposed to computing a new set of voxels. As a result, the subject system permits simulating a beating heart in a format which is easily understood by medical residents who are used to looking at X-Ray images. Another major application of the subject technique is in the art of non-destructive testing. Here, a training system could be devised in which machined parts having flaws are modeled, with the resulting 3D models being utilized to teach quality control specialists by presenting to them, in an X-Ray format, those images which they are to evaluate. In this application, it is normal for quality control specialists to utilize X-Ray inspection systems, with the subject system thus providing a valuable training tool.

More particularly, the subject system employs an algorithm that exploits an interesting mathematical property of photon beam attenuation through solid objects. Considering the process of photon beam attenuation, given a solid bar of length L with a square cross-section where each side is of length S, one can consider what will happen when a beam of photons is projected into one of the faces of the bar. In short, some or indeed most of the photons will either scatter out of or be absorbed by the bar. The mathematical relationship describing this absorption is given by:

$$I(E) = I_o(E) \exp(-mu(E)*L) \qquad \text{Equation 1}$$

where:

$I_o(E) =$ the intensity of the incoming photon stream as a function of photon energy (number of photons at a particular energy impinging upon the face of the bar during a particular time period);

$I(E) =$ the number of photons leaving the bar on the opposite end as a function of photon energy;

$mu(E) =$ the attenuation coefficient for this object as a function of photon energy;

$\exp() =$ a function that raises euler's constant to a power;

$L =$ the length of the bar; and,

$E =$ the energy per photon in the incident beam.

One can consider what happens if a particular material is embedded within another material. This attenuation can be computed as follows:

$$I = I_o(E) + \exp(-mu1(E)*(F2-F1))*\exp(-mu2(E)*\exp$$
$$(-mu1(E)*(B1-B2)) =$$
$$I_o(E)*\exp(-mu2(E)-mu1(E))*(B2-F2))*\exp$$
$$(-mu1(E)*(B1-F1))$$

The rendering algorithm uses the fact that rendering the complete object is equivalent to rendering the multiple simple objects. In general, if n objects are nested within each other, one can decompose these objects into n discrete objects, where the attenuation coefficient of each object is the difference between its original attenuation coefficient and the original coefficients of the object surrounding it.

In particular, the rendering algorithm can be implemented as follows:

The initial X-Ray rendering algorithm required the use of "nested" convex objects to produce accurate results. Thereafter, a technique has been discovered that allows the use of "nested" objects of a more general nature, i.e. convex or non-convex. What is described hereinafter is intended to reflect the changes in the initial rendering algorithm to realize this new level of generality.

The original algorithm is set forth as follows:

I. Set the X-Ray Image to a constant value of $I_o$

ii. For all objects to be rendered

A. Set the maximum Range Image to a small number

B. Set the minimum Range Image to a large number

C. Render the object saving the maximum and minimum range values in the maximum and minimum range images respectively

D. Compute the path length for each pixel by taking the absolute difference between the maximum and minimum range images

E. Compute the attenuation image using the attenuation function described in Equation 1.

F. Composite the attenuation image into the X-Ray image by multiplying the X-Ray image b the attenuation image and storing the result in the X-Ray Image.

Note the Range Image refers to an image that is produced knowing the range from the simulated photon source to the surface of the corresponding solid.

The new algorithm replaces steps II.A. through II.D. which results in the following:

I. Set the X-Ray Image to a constant value of $I_0$
II. For all objects to be rendered

    A. Define an eye beam vector and surface patches on the object along this vector
    B. For all surface patches on the object

        1. For all images pixels that correspond to the surface patch.

            a. compute the dot product of the eye vector with the surface normal vector
            b. if the dot product is not equal to 0

                1. compute the distance from the eye point to the surface point
                2. Set the sign of the distance to the opposite sign of the dot product
                3. Add the distance to the Range Image Note: at this point, the Range Image contains the path length through the object for each pixel in the image that the object effects.

    C. Compute the attenuation image using the attenuation function described in Equation 1 along with the image computed in the previous step
    D. Composite the attenuation image into the X-Ray image by multiplying the X-Ray image by the attenuation image, storing the result in the X-Ray Image.

In addition to the use of non-convex objects, this algorithm eliminates the need for minimum and maximum range buffers.

The system's principle benefit comes from the fact that it allows one to use arbitrary geometry, and not just rigid voxels, to represent renderable objects. This reduces the amount of data needed to represent an object, eliminating the high data bandwidth problems. In addition, since the object geometry is flexible, changing object geometry can often mean simply altering the boundary representation, reducing the complexity of the computations for the new geometry.

In summary, an object rendering system having a specialized algorithm is provided t convert a material and geometric description of an object to an X-Ray image of that object for use in medical applications and industrial non-destructive testing, thus to permit presentation of an object not the result of X-Ray in an X-Ray format. The system operates by considering that the object is composed of nested geometric solids, each defined by an enclosing surface, with the material property of each nested solid being defined in terms of an X-Ray mass-attenuation coefficient. Means for adjusting the mass attenuation coefficient of each of the enclosing surfaces is provided to permit each solid to be rendered independently.

In the subject system, object geometry is a solid described by a closed surface in solids geometry often referred to as a "Boundary Representation", with the algorithm allowing objects to be nested inside one another by nesting the boundaries.

Other inputs to the above algorithm are the mathematical description of a simulated X-Ray beam passing through the object and camera geometry including point of view, focal length and response of a filter to the simulated X-Ray beam.

The advantage to such a renderer is the fact that the renderer can serve as a component in a system that simulates the use of X-Ray imaging. These simulators are desirable in training environments due to the fact that real X-Ray generating devices, when in operation, can be hazardous to those individuals working with or near the device. The rendering algorithm handles geometric descriptions of objects that are not well suited to standard voxel rendering techniques.

BRIEF DESCRIPTION OF THE DRAWINGS

These and other features of the Subject Invention will be better understood in accordance with the Detailed Description taken in conjunction with the Drawings of which:

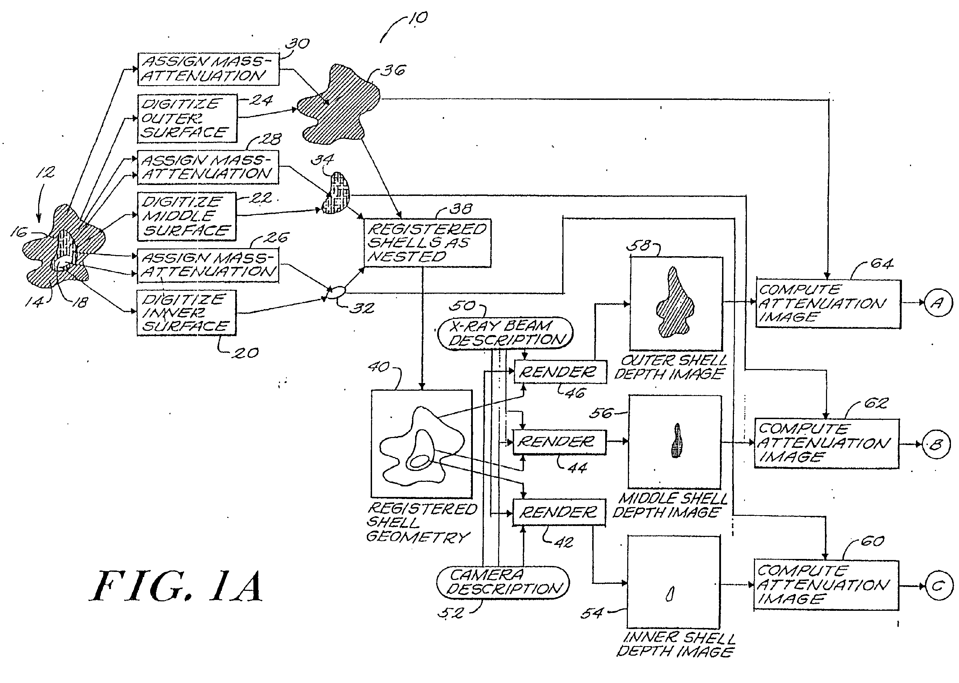

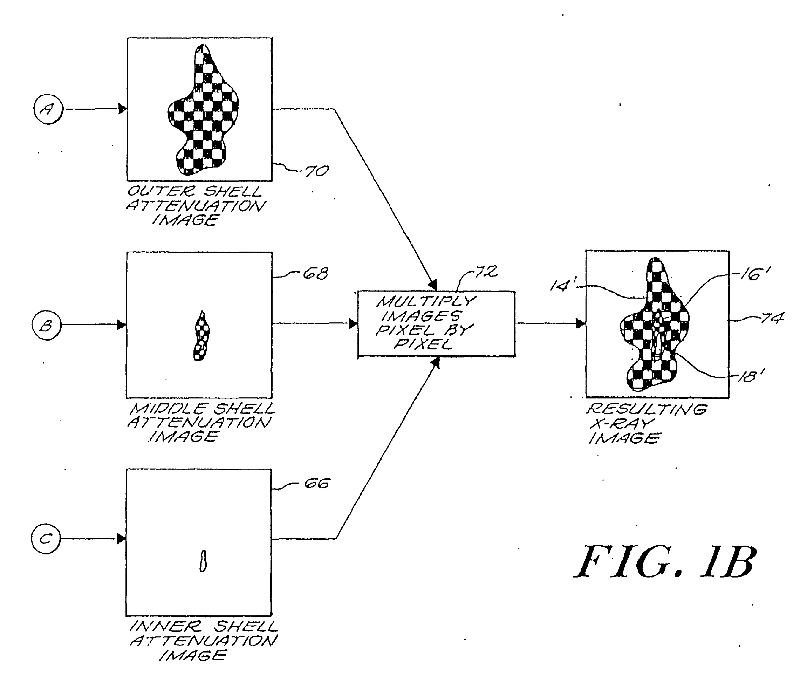

Figures 1A and 1B constitute a combined data flow diagram of the subject system showing the initial 3D object with internal solids which are digitized to assign outer surfaces and mass-attenuations, and the application of the subject algorithm to provide shell attenuation images which are combined to provide an X-Ray like image;

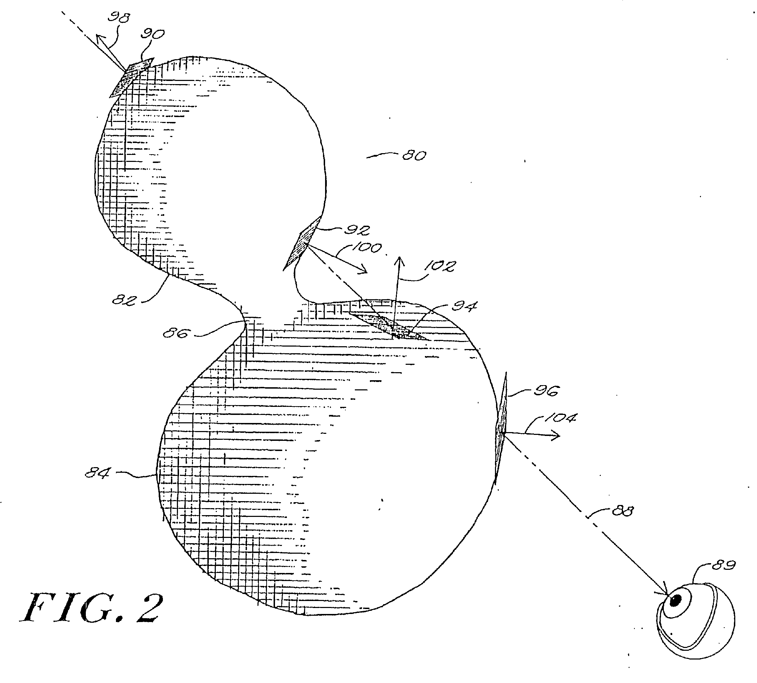

Figure 2 is a diagrammatic representation of a simulated X-Ray intersecting a non-convex solid in which vectors are obtained for the attenuation and direction of a simulated of a simulated X-Ray beam, showing that a solid with non-convex surface geometries can be processed by the subject system; and,

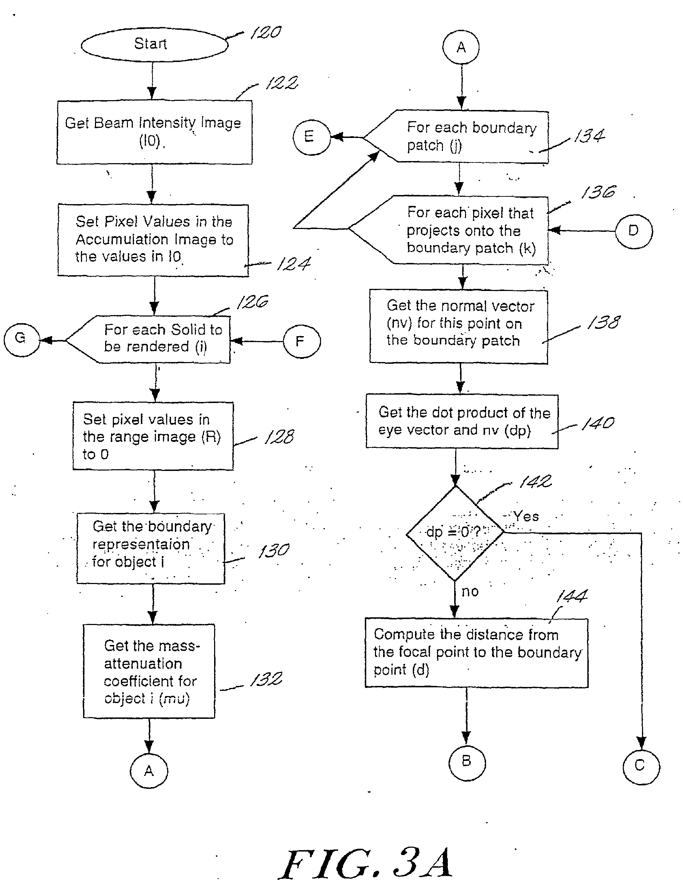

Figures 3A-3D together constitute a flow chart of the algorithm for generating the X-Ray like image from a 3D model of nested solids.

## DETAILED DESCRIPTION

Referring to Figures 1A and 1B, a system 10 is shown in which a 3D model 12 having nested solids 14, 16, and 18 is provided as an input. The outer of these nested solids are digitized respectively at 20, 22, and 24. This effectively digitizes the inner surface, the middle surface, and the outer surface of the nested solids. In addition, mass-attenuations are assigned to the respective inner, middle, and outer solids at 26, 28, and 30. The result is a set of shells 32, 34, and 36 corresponding to these surfaces filled with a uniform material having a predetermined mass-attenuation characteristic.

These shells are registered as nested at 38 so as to produce a registered shell geometry 40 for relating the surface geometries to each other. These surface geometries are to rendered at respective renderers 42, 44, and 46.

The other inputs to the renderers is an X-Ray beam description 50 and a camera description 52. Each of the renderers provides a picture of its respective shell such that an inner shell depth image 54 is made for the inner shell, with a middle shell depth image 56 for the middle shell, and an outer shell depth image 58. The purpose of providing shell depth images is to indicate the distance that a given photon ray passed through the solid. This is important because the resulting pixel value in the image is a function +of, in part, the distance traveled through the object by the photon ray. Thereafter, the depth shell images are combined with the mass-attenuation coefficients so as to permit computation of the attenuation image at 60, 62, and 64. This provides the inner, middle, and outer shell attenuation images 66, 68, and 70, shaded to indicate their densities. The attenuation images are combined pixel by pixel in a multiplication process 72, the result of which is a combined simulated X-Ray image 74 with the nested solids 14', 16', and 18' as illustrated.

The result is a formation of an image which describes the inner surfaces and consistency of the original solid in a manner in which the selected surfaces are readily apparent and in which the relative densities are also shown. This provides an excellent training tool to instruct trainees as to the inner characteristics of the object in question.

Referring to Figure 2 a non-convex object 80 is shown having a bulbous upper region 82, a larger lower bulbous region 84, and a necked down portion 86. The purpose of the Figure 2 is to indicate that it is possible to obtain an accurate path length through a non-convex object. It was originally thought that the system could only accommodate nested convex shells due to the simplicity with which the path length through the nested shells could be described. However, it has been found that non-convex portions of the solid can be adequately described through utilization of dot product comparisons of the eye vector and the surface normals. For purpose of discussion, the simulated X-Ray beam is said to travel through the object along a so called eye vector. Here the eye vector is illustrated by arrow 88 such that the vector points to eye 89 as is conventional, whereas the various surfaces of the object through which the eye vector passes are illustrates at 90, 92, 94, and 96 and are referred to as boundary surface patches. Normals to the surface patches at the entry or exit point of the eye vector are illustrated at 98, 100, 102, and 104.

These normals indicate the direction one follows to exit the solid. The purpose of using the above mentioned dot product is to be able to determine space between portions of the solid along the eye vector. In order to determine the voids or open space along this eye vector, one needs to determine entry points and exit points of the eye vector. This is accomplished in one embodiment by providing a dot product of the eye vector, the surface normal, and determining whether this dot product is either positive, negative, or zero. If the dot product is zero, the ray glances off the object and is not considered to be an entry or exit point. If the dot product is negative, the point of intersection is considered to be an entry point. If the dot product is positive, the point of intersection is considered to be an exit point. The sign of the depth value, which is the distance from the eye or source to the intersection point, is set to the opposite of the sign of the dot product. The corrected depth value is then accumulated into an image. Upon completion of the accumulations, the distance the photon ray passed through the object is contained in the accumulated image.

Knowing an exit point and a subsequent entry point makes clear that there is a void between the exit point and the next entry point.

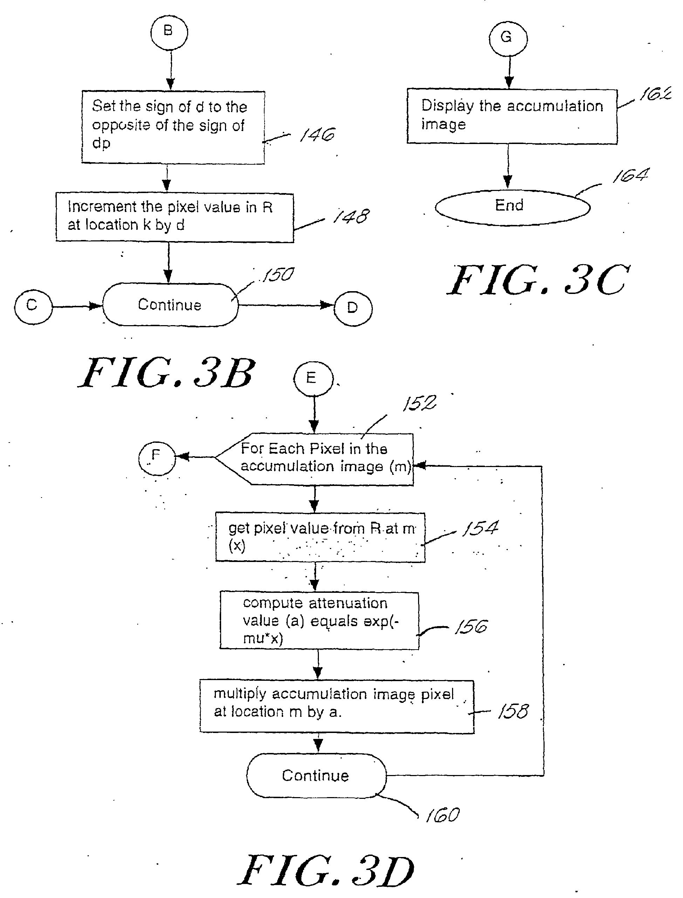

Referring to Figure 3, what is now described is a flow chart for the subject system. Here the process starts with the registered shell geometry illustrated in Figures 1A and 1B at 40 and proceeds through the renderers, the image attenuation computations, the provision of attenuation images, the multiplying of the images together pixel by pixel and ending with the final X-Ray like image as shown at 74.

As will be appreciated, and referring to Figure 3, when starting at 120, one needs to obtain the beam intensity of an image as illustrated at 122, the purpose of which is to characterize the X-Ray emission and detection when there are no attenuation solids to be imaged, thus to provide a baseline. The baseline image intensity is thus designated $I_0$.

This corresponds to a first pass of the system of Figures 1A and 1B in which unit 72, which multiples images pixel by pixel, requires an initial image into which the rendered objects are composited.

Thereafter, as illustrated at 124, pixel values in the accumulation image are set to the values in $I_0$ as derived from unit 122. Then, as illustrated in 126, for each solid to be rendered, denoted by i, the steps are as indicated blocks 128, 130, and 132. As will be described, a loop is performed for each boundary patch j, where the term "boundary patch" refers to a small portion of the boundary of the solid through which the ray passes so that a normal vector can be established for this point and this patch. It is important that these normals be established for each pixel that is projected onto the patch. It is standard practice in computer graphics to decompose the boundary of a solid into small patches that are simply described mathematically.

It is at this juncture that the X-Ray beam description and the camera description is applied to each renderer on a patch by patch basis. Since the boundary of a solid is a collection of patches, the purpose of the loop designated by block 126 is to obtain the various boundaries for each of the nested solids expressed as a list of patches.

This looping process is performed for each solid. As illustrated, for each solid, one must set the pixel values in the range image R to 0 as illustrated at 128, obtain the boundary representation for the object i as illustrated in 130, and obtain the mass attenuation coefficient for the object i (mu), with the result being a complete characterization of the solid.

Thereafter, as illustrated at 134, each patch is processed by this loop to establish a reference to patches that compose the solid's boundary. Thereafter, another loop is performed, as illustrated at 136, which makes sure that the image pixels that project onto the boundary patch are referenced as well.

This referencing is utilized by blocks 138, 140, 142, 144, 146, and 148. As described before, it is important to obtain a normal vector for each point on a boundary patch and to obtain a dot product with the eye vector to be able to compute the path length through the solid. This path length is important in the rendering because it defines the distance between the entry point and the exit point of a ray. Having established this distance, in order to know whether there is a void or not, the sign of the dot product indicates either an entrance or an exit point.

As can be seen, one first obtains the normal vector (nv) for point k on the boundary patch j. This establishes a correspondence between the point in the patch and the image pixel being formed in the final rendered image.

Thereafter, and as illustrated at 140, one obtains the dot product of the eye vector and the normal vector to yield a dot product, dp. If the dot product is equal to 0, as illustrated by decision block 142, the process continues as illustrated at 150 which loops back to block 136 for the processing of another pixel in this boundary patch.

If the dot product is not equal to 0, and as illustrated at 144, the system computes the distance from the eye point to boundary patch j point k. This distance is provided to block 146 which sets the sign of the distance, d, to the opposite of the sign of the dot product. Having set the sign of the distance opposite the sign of the dot product, one adds the distance to an accumulation image, such that the pixel value in R at location k is incremented by d. The result of the incrementing is to obtain the path length of the incident ray through the solid object.

Once all the boundary patches have been processed, and as illustrated at 15, the loop allows the resulting image to be composited. This is accomplished by obtaining the pixel value from image R at pixel location m. This value is referred to as x, as illustrated in 154.

The attenuation computation, as illustrated at blocks 60, 62, and 64 of Figures 1A and 1B is performed as illustrated at 156 in accordance with the Equation 1 above so as to provide as an output the percentage attenuation of the ray. In other words, after having obtained the path length and the mass attenuation value, it is now possible to complete the rendering of the image. This is accomplished by multiplying the attenuation value into the accumulation image that initially holds $I_0$ and is accomplished at block 158. Note that this is an iterative process that continues, as illustrated at 160, for each pixel until all solids are rendered in memory.

Thereafter, as illustrated at 162, the accumulated image is displayed, and the process ends as illustrated at 164.

What is now presented is a program listing for the rendering of X-Ray like images:

```
// and its documentation, as-is, for any purpose is hereby granted without
// fee, provided that (i) the above copyright notices and this
// permission notice appear in all copies of the software and related
// documentation, and (ii) the name of Silicon Graphics may not be
// used in any advertising or publicity relating to the software
// without the specific, prior written permission of Silicon Graphics.
// Permission to modify this software, and to use copy and distribute such
// modified software, is hereby granted without fee, provided that (i) the
// modified software is designed for use only in connection with the
// Optimizer (tm) product, (ii) the modified software is not distributed,
// incorporated, or otherwise included with any product that is
// competitive with Optimizer (tm), (iii) the above copyright
// notices and this permission notice appear in all copies of the software
// and related documentation, and (iv) the name of Silicon Graphics may
// not be used in any advertising or publicity relating to the software
// without the specific, prior written permission of Silicon Graphics.
//
// THE SOFTWARE IS PROVIDED "AS-IS" AND WITHOUT WARRANTY OF ANY KIND,
// EXPRESS, IMPLIED OR OTHERWISE, INCLUDING WITHOUT LIMITATION, ANY
// WARRANTY OF MERCHANTABILITY OR FITNESS FOR A PARTICULAR PURPOSE.
//
// IN NO EVENT SHALL SILICON GRAPHICS BE LIABLE FOR ANY SPECIAL,
// INCIDENTAL. INDIRECT OR CONSEQUENTIAL DAMAGES OF ANY KIND, OR ANY
// DAMAGES WHATSOEVER RESULTING FROM LOSS OF USE, DATA OR PROFITS,
// WHETHER OR NOT ADVISED OF THE POSSIBILITY OF DAMAGE, AND ON ANY
// THEORY OF LIABILITY, ARISING OUT OF OR IN CONNECTION WITH THE USE
// OR PERFORMANCE OF THIS SOFTWARE.
//
// #################################################################
//
// $Revision: 1.69 $
// $Date: 1997/06/30 00:05:37 $
#include <stdio.h>
#include <iostream.h>
#include <Cosmo3D/csFields.h>
#include <Cosmo3D/csGroup.h>
#include <Optimizer/opAppStats.h>
#include <Optimizer/opArgs.h>
#include <Optimizer/opGenLoader.h>
#include <Optimizer/opGFXSpeed.h>
#include <Ootimizer/opInit.h>
#include <Optimizer/opOccDrawImpl.h>
#include <Optimizer/opDefDrawImpl.h>
#include <Optimizer/opPickDrawImpl.h>
#include <Optimizer/opReflMap.h>
#include <Optimizer/opTraverse.h>
#include <Optimizer/opTriStats.h>
#include <Optimizer/opViewer.h>
#include <Optimizer/opTessParaSurfaceAction.h>
#include <Optimizer/opTessNurbSurfaceAction.h>
#include <Optimizer/opTessCurve3dAction.h>
#include <Optimizer/opTopo.h>


//----- my includes ------
#include "opXrayViewer.h"
#include "opXrayDrawImpl.h"
//------------

enum topologyOption (TOPO_TWO_PASS, TOPO_ONE_PASS, TOPO_NO};

int main(int argc, char *argv[])
(
    opInit();
```

```
opArgParser   args;
char          *filename;
bool          haveX=-1, haveY=-1, haveW=-1, haveH=-1, haveSize=-1;
int           x=1280-600-10, y=0, w=500, h=900;
bool          haveDL;
bool          haveFrameCount;
int           frames = 0;
bool          havePrint;

bool          haveFlatten;
bool          haveShortNorms;

bool          haveReflMap;
char          *reflMapFilename;

bool          haveCeilingMap;
char          *ceilingMapFilename;

bool          haveCylinderMap;
bool          haveGaussianMap;
int           numFiles;

bool          haveLODbias;
int           lodBias;

bool          haveChordalTol = -1;
opReal        chordalTol = 0.01; // 100th of meter if meters are the units of choic

bool          haveTopoTol;
opReal        topoTol;

bool          haveBackgroundColor;
float         backgroundRed, backgroundGreen, backgroundBlue, backgroundAlpha;

bool          haveRotation;
float         vx, vy, vz, angle;

bool          haveTranslation;
float         tx, ty, tz;

bool          haveSamples;
int           samples;

bool          haveTessType = -1;
char           "tessType = NULL;

bool           haveCTess;

// --- Draw impl options
bool      haveOccCull;
int       nProcs = 2;
bool      haveNoPick = false;
bool      removeColors;

// Option to playback recordings
bool      havePath;
char      *pathFile;
bool      haveAutoPlay;

bool      haveOneAppearance;

.bool     isOnePass = false;
```

```
args.defRequired( "%s",
                   "<filename>",
                   &filename);

args.defOption( "-width %d",
                "-width <window width>",
                &haveW,          &w );

args.defOption( "-height %d",
                "-height <window height>",
                &haveH,          &h );

args.defOption( "-size %d",
                "-size <window width=hieght>",
                &haveSize,       &w );

args.defOption( "-xpos %d",
                "-xpos <window x screen position>",
                &haveX,          &x );

args.dafOption( "-ypos %d",
                "-ypos <window y screen position>",
                &haveY,           &y );

args.defOption( "-useDL",
                "-useDL",
                &haveDL );

args.defOption( "-frames %d",
                "-frames <n>",
                &havaFrameCount, &frames );

args.defOption( "-print",
                "-print",
                &havePrint );

args.defOption( "-flatten",
                "-flatten",
                &haveFlatten );

args.defOption( "-shortNorms", _
                "-shortNorms",
                &haveShortNorms');

args.defOption('-reflmap %s",
                "-reflmap <filename>",
                &haveReflMap,    &reflMapFilename );

args.defOption("-ceilingmap %s",
                "-ceilingmap",
                &haveCeilingMap, &ceilingMapFilename ):

args.defOption("-cylindermap",
                "-cylindermap",
                &haveCylinderMap );

args.defOption("-gaussianmap",
                "-gaussianmap",
                &haveGaussianMap );

args.defOption("-occ %d",
                "-occ <nProcs>",
```

```
                    &haveOccCull, &nProcs);

     args.defOption( "-nopick",
                     "-nopick",
                     &haveNoPick);

     args.defOption( "-lodBias %d",
                     "-lodBias <integer>",
                     &haveLODbias, &lodBias );

     args.defOption( "-noColors",
                     "-noColors removes color bindings from csGeoSets",
                     &removeColors);

     args.defOption( "-path %s",
                     "-path <filename>",
                     &havePath, &pathFile );

     args.defOption( "-autoplay",
                     "-autoplay",
                     &haveAutoPlay);

#ifdef OP_REAL_IS_DOUBLE
     args.defOption( "-ctol %l",
                     "-ctol <max chordal deviation>",
                     &havaChordalTol, &chordalTol );

     args.defOption( "-ttol %1",
                     "-ttol <topology tolerance> (setting ttol implies automatic topol
                     &haveTopoTol, &topoTol );
#else
     args.defOption( "-ctol %f",
                     "-ctol <max chordal deviation>",
                     &haveChordalTol, &chordalTol );

     args.defOption( "-ttol %f",
                     "-ttol <topology tolerance> [asetting ttol implies automatic topo
                     &haveTopoTol, &topoTol );

#endif
     args.defOption( "-ctess",
                     "-ctess enables tessellation of 3D curves",
                     &haveCTess );

     args.defOption( "-onePass", -
                     "-onePass [build topology while tessellating]",
                     &isOnePass );

     args.defOption( "-oneAppearance",
                     "-oneAppearance",
                     &haveOneAppearance );

     args.defOption( "-ceilingmap %s",
                     "-ceilingmap",
                     &haveCeilingMap, &ceilingMapFilename );

     args.defOption( "-tess %s",
                     "-tess <gen(eral) nurb no>",
                     &haveTessType, &tessType );

     // User defined background color
     args.defOption( "-background %f %f %f %f",
                     "-background <red> <green> <blue><alpha>",
```

```
                            &haveBackgroundColor, &backgroundRed, &backgroundGreen, &backgrou

        // User defined model orientation
        args.defOption("-rotation %f %f %f %f",
                       "-rotation <vx> <vy> <vz> <angle>",
                       &haveRotation, &vx, &vy, &vz, &angle );

        args.defOption("-translation %f %f %f",
                       "-translation <tx> <ty> <tz>",
                       &haveTranslation, &tx, &ty, &tz );

        args.defOption("-samples %d",
                       "-samples <tessellator sample count>",
                       &haveSamples, &samples);

        // Print out version of Optimizer
        fprintf(stderr, "\n%s\n\n", opVersion());
        fprintf(stderr, "**********************R*E*M*I*N*D*E*R**********************
        fprintf(stderr,"**** To run your modified version of demo, use ./viewDemo, \n");
        fprintf(stderr,"**** else the installed /usr/sbin version is used\n");
        fprintf(stderr,"**************************************************************
        numFiles = args.scanArgs(argc,argv);

        //set topoOption
        topologyOption topoOption;

        if (!haveTopoTol)(
            topoOption = TOPO_NO; //don't build topology
        }
        else
           if (isOnePass){
               topoOption = TOPO_ONE_PASS; //build topology while tessellating.
           }
           else(
                topoOption = TOPO_TWO_PASS; //build topology in a seperate pass before te
           )

        if (haveSize)
           h = w;

        // Create a tessellator
        opTessParaSurfaceAction *tess;

        if (tessType == NULL )
           tess = new opTessParaSurfaceAction;
        else
           if (stromp(tessType, "gen" ) == 0 )
              tess = new opTessParaSurfaceAction;
           else
           if (stromp(tessType, "nurb" ) == 0 )
              tess = new opTessNurbSurfaceAction;
           else
              if (stromp(tessType, "no" ) == 0)
                 tess = NULL;
              else
                 tess = new opTessParaSurfaceAction;

    // Set the chordal tolerance
    if(tess)(
       tess->setChordalDevTol(chordalTol );
       // Set the sample count if the user set them
       if (haveSamples )
          tess->setSampling(samples );
```

```
        }

        //topology
        opTopo *topo = new opTopo;

        // Set the topology parameters
        if ( haveTopoTol )(
           topo->setDistanceTol(topoTol, meter );
        }

        // Create a loader
        opGenLoader *loader;

        if(topoOption == TOPO_TWO_PASS) {//build topology before tessellating any surface
           //the tessellaotor is not bound to the loader so that there is
           //no tessellation at loading. The reason is because tessellation has to
           //wait until topology construction is completely done for all the surfaces
           loader = new opGenLoader( true, NULL, false );
        }
        else
          if( topoOption == TOPO_ONE_PASS )(//build topology while tessellate
              //tell the tessellator to invoke topology construction at tessellation
              tess->setBuildTopoWhileTess(true);
              //Sets the topology which will used in the topology building at tessellat
              tess->setTopo(topo);
              //bind tessellator to loader so that tessellation is invoked at loading
              loader = new opGenLoader(true, tess, false );
          )
          else (//don't build topology
              //bind tessellator to loader so that tessellation is invoked at loading
              loader = new opGenLoader(true, tess, false );
          }

        // Load the file on the command line and get a scene graph back
        csGroup "obj = loader->load( filename );

        if (numFiles) (
           int i;
           csGroup *grp = new csGroup;
           if (obj) (
             grp->addChild(obj);
            )
           char **xtraFiles = args.getRemainingArgs();
            for (i=0;i<numFiles;i++) (
               fprintf(stderr, "loading file %d %s\n",i,xtraFiles[i]);
               obj = loader->load(xtraFiles[i]);
               if (obj) (
                  gro->addChild(obj);
               }
            }
           obj = grp;
         )

        // Throw the loader away, we're done with it
        delete loader;

        // Build topology if we haven't done it and the user asks for it
        if ( obj && topoOption == TOPO_TWO_PASS) (
           fprintf(stderr, "Building topology starts ... \n");
           topo->buildTopologyTraverse( obj );
           fprintf(stderr, "Building topology done\n");
           fprintf(stderr, 'Tessellation starts ... \n");
           tess->apply( obj );
```

```
        fprintf(stderr, "Tessellation done ... \n");
    )

    delete tess;

    // Now optionally tessellate curves
    if ( haveCTess )(
        opTessCurve3dAction *tess = new opTessCurve3dAction;

        tess->setChordalDevTol( chordalTol );

        if ( haveSamples )
            tess->setSampling( samples );

        tess->apply( obj );
    }

    // If we got a scene graph draw it else end the program
    if ( obj )(
        // Get stats on the scene graph
        opTriStats stats;
        stats.apply(obj);
        printf("Scene statistics:\n");
        stats.print();

        if (haveOneAppearance){
            opCollapseAppearances c;
            c.apply(obj);
        }

        if (removeColors)
            opRemoveColorBindings(obj);

        // Optionally flatten the scene graph
        if (haveFlatten)
            obj = opFlattenScene(obj);

        if (haveShortNorms)
            opShortNormsScene(obj);

        //-------------------------------
        // Note: viewer must be created before opDListScene.
        //opViewer *viewer = new opViewer("Optimizer", x, y, w, h);
        cout << w << " " << h << endl;
        opXrayViewer *viewer = new_opXrayViewer("Xray", x, y, w, h);
        //-------------------------------

        if ( haveBackgroundColor )(
        viewer->setBackgroundColor(backgroundRed, backgroundGreen, backgroundBlu
    }

    // Set the LOD bias
    if (haveLODbias)(
        viewer->setLODbias(lodBias );
    }

    // Make Occ draw object the default.
    opOccDrawImpl *occDrawImpl = NULL;
    if (haveOccCull || havePath)(
        occDrawImpl = new opOccDrawImpl(viewer);
        viewer->setDrawImpl(occDrawImpl);

        if (havePath)
```

```
        occDrawImpl->loadRecording(pathFile);
    }


    //--------------
    viewer->rememberDefaultDrawImpl():
    //--------------


    opPickDrawImpl *pi = NULL:
    if (! haveNoPick) (// bad grammar, i know
      pi = new opPickDrawImpl(viewer);
      // Use default DrawImpl until pick invoked
    )


    if (havePrint)
       opPrintScene(obj);


    viewer->addChild(obj);
    viewer->setViewPoint(obj);


     // A new reflection map
    opReflMap *rm = NULL;


    if ( haveReflMap )(
        rm = new opReflMap( obj, reflMapFilename, opReflMap::SPHERE );
     }
    else
        if ( haveGaussianMap )(
            rm = new opReflMap( obj, (char *)NULL, opReflMap::GAUSSIAN | opReflMa
        )
 - else
            if ( haveCylinderMap )(
              rm = new opReflMap( obj, (char *)NULL, opReflMap::CYLINDER );
            )
            else
              if ( haveCeilingMap ) {
                 rm = new opReflMap( obj, ceilingMapFilename, opReflMap::CEILL
              }


    viewer->setReflMap( rm );


    // --- picker needs refl map for highlighting (could be passed into construct
    if (pi != NULL)
        pi->setReflMap( rm );


    // Build display lists
    // Note: this must be done after instantiating opReflMap and any
    // other csGeometry changes.
    if (haveDL)(
        printf("Display listing sçene.\n");
        opDListScene(obj);
            }


            if ( haveRotation )(
               viewer->setModelRotation( vx, vy, vz, angle );
            }


            if ( haveTranslation )(
               viewer->setModelTranslation( tx, ty, tz );
            )


            if ( rm ! = NULL )(
               viewer->setLightsMode( false );
               csContext::setLightEnable(FALSE);
```

```
                rm->setTextureApp( true );
            }

            //--------------
            //csDataKid *data = new csDataKid( );
            //--------------

            if (haveFrameCount)
               for (int i=0;i<frames;++i)
                  viewer->update();
            else
               if (haveAutoPlay && havePath)
                  occDrawImpl->playback(true);
               else
                  viewer->eventLoop();
        )
    )
//#define ORTHO
#if 0
#define GLORTHO_PARAMS -100, 100, -100, 100, -100, 100
#else
#define GLORTHO_PARAMS -4.3, 4.3, -3.4, 3.4, -100, 100 //for apple.csb
#endif

#define FIRST_ALGORITHM // firt one cannot render concave objects.

//#define CHEAT_CALC_ERROR // don't need anymore
#define CHEAT_THRESHOLD 255//180

//#define NUM_OF_OBJ               8 // for attenuation assign cycle
#define NUM_OF_OBJ              16 // for attenuation assign cycle
#define TMP_LIMIT_PER_SHAPE      1 // for tmply limiting number of geoset to draw
#ifndef ORTHO
#define ATT_COEF    5.0//2.0
#else
#define ATT_COEF    5.0*4.0
#endif

#define TAKE_PLUS_DOTPRODUCT

const double CAMERA_X = 0.0;
const double CAMERA_Y = 0.0;
const double CAMERA_Z = 20.0; //20.0 //for apple.csb

#if 1
#define ATTENUATION_ARRAY (\
            1, \
            0, \
            1, \
            1, \
            1, \
            1, \
            1, \
            1,\
            1,\
            -1,\
            -1,\
            -1,\
            -1,\
            1,\
            -1,\
            -1,\
            1,\
```

```
                    1.\
                    1.\
                    1\
            }
    #else
    #define ATTEMUATION_ARRAY (\
                    -1,\
                     1, \
                    -1, \
                     1, \
                    -1,\
                     1, \
                    -1, \
                     1,\
                    -1, \
                     1, \
                    -1, \
                     1, \
                    -1, \
                     1,\
                    -1,\
                     1,\
                    -1,\
                     1,\
                    -1,\
                     1\
                }

    #endif

    #include <iostream.h>

    #include <Cosmo3D/csShape.h>
    #include <Cosmo3D/csTransform.h>
    #include <Cosmo3D/csTriStripSet.h>
    #include <Cosmo3D/csTriFanSet.h>
    #include <Cosmo3D/csCoordSet.h>

    #include "opXrayDrawAction.h"
    #include "opXrayViewer.h"

    //--- forbidden globals
    opXrayDrawAction* globalXrayDrawAction; //global: I know this is dirty.
    short tmpcount;
    extern float gEyeX, gEyeY, gEyeZ;

    //void draw2(csShape *shape);

    //%%%%%%%%%%%%%%%%%%%%%%%%%%%%%%%%%%%%%%%%%%%%%%%%%%%%%%%%%%%%%%%%%%
    opTravDisp opXrayDrawAction :: preNode (
                            csNode*&n, const opActionInfo& )
    (
     csType *t = n->getType();

    // if( n->isOfType( csGroup::getClassType()) )
    // cout << "csGroup " << endl;

     if ( t->isDerivedFrom(csShape::getClassType()) ) (
        csShape *shape = (csShape *)n;

        static attenuationFlag[30] = ATTENUATION_ARRAY;

        static short count = 0;
```

```
        double attenuation;
        attenuation = ATT_COEF*attenuationFlag[count];

            cout << count << " " << n->getName() << endl;

        count++;
        if( count >= NUM_OF_OBJ+1 )
            count = 0;


        globalXrayDrawAction = this; //Hey, it's dirty.


#ifdef FIRST_ALGORITHM
        //----------------------------------------
        //              glDisable( GL_CULL_FACE );
        //              glEnable( GL_CULL_FACE );
        //              glCullFace( GL_FRONT );
        glDepthFunc(GL_GREATER);
        glClearDepth(0.0);
        glClear(GL_DEPTH_BUFFER_BIT);
        //              csContext::setCullFace( csContext::NO_CULL );
        shape->draw();
        glReadPixels( 0, 0, w_win, h_win, GL_DEPTH_COMPONENT, GL_FLOAT, depthMax );//
        //------------------------------------------
        glDepthFunc(GL_LESS);
        glClearDepth(1.0);
        glClear(GL_DEPTH_BUFFER_BIT);
        //            glEnable( GL_CULL_FACE );
        //            glCullFace( GL_BACK );
        //            csContext::setCullFace( csContext::BACK_CULL );
        shape->draw();
        glReadPixels( 0, 0, w_win, h_win, GL_DEPTH_COMPONENT, GL_FLOAT, depthMin );
        //------------------------------------------

        for( short i = 0; i < h_win; i++ )(
            for( short j=0; j< w_win; j++ ) (
                if( depethMax[i][i] != 0.0 && depthMin[i][i] != 1.0 &&
                    depthMin[i][i] < depthMax[i][i] ) (
                    //if( depth0[i][j]<depthl[i][j] ) // a bit slower
                    depthRange[i][j] = depthMax[i][j] - depthMin[i][j];
                    // don't have to have this buffer
                    GLdouble tmp = accumulationImage[i][j];
                    accumulationImage[i][j]
                        = exp(-attenuation*depthRange[i][j])*tmp;
                    //cout << "\t" << i << "\t" << j << "\t"
                       //<< accumulationImage[i][j]<< "\t"<< depthRange[i][j] << "\t
                    //    << depthMax[i][j] << " " << depthMin[i][j] << endl;
                    }
                )
            }
        //     cout << " I am here " << endl;


#else //SECOND_ALGORITHM
        //*********************************************************
        short i, j;
        for( i = 0; i < h_win; i++ )(//block copy may be faster.
            for( j=0; j< w_win; j++ ) (
                depthRange[i][j] = 0.0;
            )
        )

        shape->draw(); // call to the modified version
        //draw2 (shape) ;
        for( i = 0; i < h_win; i++ )(// this process may be done in conjunction wit
```

```
      for( j=0; j< w_win; j++ ) (
          if( depthRange[i][j] != 0.0 ) (
            GLdouble tmp = accumulationImage[i][j];
            accumulationImage[i][j]
                = exp(-attenuation*depthRange[i][j])*tmp; // use table
          }
      }
      //*********************************************************

#endif
}
    else {
    if (t->isDerivedFrom(csTransform::getClassType())) {
        csTransform *transform = (csTransform *)n;
        csMatrix4f m;
        transform->getMatrix(m);
        csMatrix4f mm; -
        transform->getMatrix(mm);
        glPushMatrix();
      glMultMatrixf(m[0]);

#ifndef FIRST_ALGORITHM
        if(!gotSyePoint){
            //float mv[16];
            glGetFloatv( GL_MODELVIEW_MATRIX, mv );

            gEyeX = -mv[12];
            gEyeY = -mv[13];
            gEyeZ = -mv[14];

            for( short i = 0; i<16; i++ )
                cout << i << "\t" << mv[i] << endl;
            gotEyePoint = true;

            csCamera* camera = viewer->getCamera():
            //csCamera* camera = getCamera(); // if this class is derived from cs
            float x,y,z,w;
            //camera->draw();
            camera->getPosition(&x,&y,&z);
            cout << "Camera" << x << " " << y << " " << z << endl;

            csFloat tx,ty,tz,rx,ry,rz,rad;
            transform->getTranslation(&tx,&ty,&tz);

            cout << "translation " << tx << " " << ty << " " << tz << endl;
            transform->getRotation(&rx,&ry,&rz,&rad);
            cout << "rotation " << rx << " " << ry << " " << rz << " " << rad <<e

            csMatrix4f mmm;
//          cout << "mm " << endl;
//          mm.write();
            mmm.invertFull(mm);
//          cout << "mmm" << endl;
//          mmm.write();
            mmm.getCol(3,&x,&y,&z,&w);
            cout << "\nxyzw" << x << " " << y << " " << z << "-" << w <<endl;
            mmm.getRow(3,&x,&y,&z,&w);
            cout << "\nxyzw" << x << " " << y << " " << z << " " << w <<endl;

            gEyeX = x;
            gEyeY = y;
            gEyeZ = z;
```

```
        }
#endif
    )
  }
  return opTravCont;
  //return opTravPrune;
}
//%%%%%%%%%%%%%%%%%%%%%%%%%%%%%%%%%%%%%%%%%%%%%%%%%%%%%%%%
opTravDisp opXrayDrawAction::postNode(csNode *&n, const opActionInfo&)
(
    csType *t = n->getTypa();
    if (t->isDerivedFrom(csTransform::getClassType())){
        glPopMatrix();
    }
    //cout << "postNode" << endl;
    return opTravCont;
)
//%%%%%%%%%%%%%%%%%%%%%%%%%%%%%%%%%%%%%%%%%%%%%%%%%%%%%%%%
void opXrayDrawAction::begin(csNode *&, const opActionInfo&)
{
    short i. j;
    //    cout << "begin" << endl;

    //return;
    glEnable( GL_DEPTH_TEST );
    for( i = 0; i < h_win; i++ )          (
        for(j=0; j< w_win; j++ )          (
             accumulationImage[i][j] = 1.0; // block copy may be faster
             // should load from I0 image
        )
    }

    tmpcount = 0;
    gotEyePoint = false;

#ifdef ORTHO
    // hey
    glMatrixMode( GL_PROJECTION );
    glLoadIdentity();
    glOrtho ( GLORTHO_PARAMS );
#endif

    // return opKeepThis;
)
//%%%%%%%%%%%%%%%%%%%%%%%%%%%%%%%%%%%%%%%%%%%%%%%%%%%%%%%%
opActionDisp opXrayDrawAction::end(csNode *&, const opActionInfo&)
{
    //return opKeepThis;
    static GLubyte forCheat;

    short i, j;
    for( i = 0; i < h_win; i++ ){
        for(j=0; j < w_win; j++ ){
            pixels[i][j][0] = pixels[i][j][1] = pixels[i][j][2].//.could be eliminate
             = 255*(1.0-accumulationImage[i][j]);
            //= 255*(accumulationImage[i][j]);
//          cout << (unsigned short)(pixels[i][j][0]) << "\t"<< i << "\t" << j <
//                 << accumulationImage[i][j]<< "\t"<< depthRange[i][j] << "\t"
//                 << depthMin[i][j] << endl;

#ifdef CHEAT_CALC_ERROR
            if((unsigned short)(pixels[i][j][0]) != 0 &&
                (unsigned short)(pixels[i][j][0]) > CHEAT_THRESHOLD )(
```

```
            cout << (unsigned short)(pixels[i][j][0]) << "\t"<< i << "\t" << j <
                << accumulationImage[i][j]<< "\t"<< depthRange[i][j] << "\t"
                << depthMin[i][j]<< endl;
    )// end of if

            if((unsigned short)(pixels[i][j][0]) > CHEAT_THRESHOLD ){
                pixels[i][j][0] = pixels[i][j][1] = pixels[i][j][2] = forCheat;
            }
            else
                forCheat = pixels[i][j][0];

#endif
        )
    )

    glDisable( GL_DEPTH_TEST );
    //glFlush();
    // return opKeepThis;

    glDrawPixels( w_win, h_win, GL_RGB, GL_UNSIGNED_BYTE, pixels );
    glFlush();
//    cout << "end" << endl;
    return opKeepThis;
}
//%%%%%%%%%%%%%%%%%%%%%%%%%%%%%%%%%%%%%%%%%%%%%%%%%%%%%%%%%%%%%%%%%%
#ifndef FIRST_ALGORITHM

void csShape::draw()
    //void draw2(csShape *shape)
{
    //shape->draw();

    //glDepthRange( gCamera->getNearClip(), gCamera->getFarClip() );
    //glDepthRange( 1,2 );
 // cout << gCamera->getNearClip()<< endl << gCamera->getFarClip() << andl << end

    //csFrustum &frus;
    // frus = gCamera->getViewFrust();

    short count = /*shape->*/getGeometryCount();

    cout << *There are "<< count << " geoSets in this csShape obj.-" << endl;

    for( short i = 0; i<count; i++ ) (

        csGeometry *geo = /*shape->*/getGeometry(i);
        //geo->draw();
        csType *t = geo->getType();
        if (t->isDerivedFrom(csTriStripSet::getClassType())){// GeoSet

            /* opXrayDrawAction::*/tmpcount++;

            if(/*opXrayDrawAction::*/tmpcount > TMP_LIMIT_PER_SHAPE }
                return;

            csTriStripSet *triStripSet = (csTriStripSet*)geo;
            ccut << "There are " << triStripSet->getPrimCount()
                << " triStrips in the triStripSet.* << endl;
            csMFInt *F = (csMFInt*)triStripSet->getField(csTriStripSet:: STRIP_LENGTH

            //in csGeoSet, protected. But #if outed.
            //void getCoordFromCoordSet(csCoordSet *n, int i, csVec3f &v);
            //
```

```
// I don't use opConvertor::getTriangle() this time.
short offset = 0;
csCoordSet3f *coord = (csCoordSet3f*)triStripSet->getCoordSet();
csMFVec3f *mvec = coord->point(); // a geoSet has a coordSet.

//csNormalSet3f *norm = (csNormalSet3f*)triStripSet->getNormalSet();

//long cameraX, cameraY, cameraZ; big bug
double cameraX, cameraY, cameraZ;
cameraX = gEyeX;
cameraY = gEyeY;
cameraZ = gEyeZ;

for( short j = 0; j < F->getCount(); j++ ) {// each stripSet
    short length = F->get(j);// number of triangles +2
    //cout << "#" << j << " triStrip has "
    //     << length << " points." << endl;

    double continuous = 0.0;
    for( short k = 0; k < length-2; k++ ) (
    csVec3f vec;
    float x0,y0,z0, x1,y1,z1, x2,y2,z2;
    mvec->get(offset+k, vec ); // you can fetch to speed up.
    vec.get(&x0,&y0,&z0);
    if( k%2 != 0 )(
        mvec->get(offset+k+1, vec );
        vec.get(&x1,&y1,&z1);
        mvec->get(offset+k+2, vec );
        vec.get(&x2,&y2,&z2);
    }else(
        mvec->get(offset+k+2, vec );
        vec.get(&x1,&y1,&z1);
        mvec->get(offset+k+1, vec );
        vec.get(&x2,&y2,&z2);
    }
    //cout << "Vec #" << k << " \t"
    // << x0 << " \t" << y0 << " \t" << z0 << endl;

    static counter = 0;
    // cout << counter <<" ";
    counter++;

    // external product of 2 edges = normal for the triangle
    double extX = (y1-y0)*(z2-z0) - (z1-z0)*(y2-y0);
    double extY = (z1-z0)*(x2-x0) - (x1-x0)*(z2-z0);
    double extZ = (x1-x0)*(y2-y0) - (y1-y0)*(x2-x0);
    double extLen = sqrt(extX*extX + extY*extY + extZ*extZ);
    extX /= extLen;
    extY /= extLen;
    extZ /= extLen;
    //cout << "ext " << extX << " " << extY << "" <<extZ << endl;

    /*
    csFloat vx, vy, vz;
    gCamera->getPosition(&vx, &vy, &vz );
    gCameraX = vx;
    gCameraY = vy;
    gCameraZ = vz;
    cout << vx << " " << vy << " " << vz << endl;
     cout << gCameraX <<" " << gCameraY <<" " << gCameraZ << endl;

    const csFrustum &frust = gCamera->getViewFrust();
    csVec3f eye;
```

```
                frust.getEye(eye);
                double eyeX, eyeY, eyeZ;
                eye.get( &eyeX, &eyeY, &eyeZ );
                cout << "eye " << eyeX << " " << eyeY << " " << eyeZ << endl;
                */
                double rayX = cameraX - (x0+x1+x2)/3;
                double rayY = cameraY - (y0+y1+y2)/3;
                double rayZ = cameraZ - (z0+z1+z2)/3;
#ifdef ORTHO
                rayX = cameraX + 0.00123298;
                rayY = cameraY - 3.21253;
                rayZ = cameraZ;
                //cout << rayX << " " << rayY << " " << rayZ << endl;
#endif
                double rayLen = sqrt( rayX*rayX + rayY*rayY + rayZ*rayZ );
                rayX /= rayLen;
                rayY /= rayLen;
                rayZ /= rayLen;

                //cout << "ray " <<_rayX << " " << rayY << " " << rayZ << endl;
                // dot product
                double dotp = extX*rayX + extY*rayY + extZ*rayZ;

                //cout << "started footPrinting " << k << endl;
                //cout << "dotp " <<dotp << endl;

                if( continuous == 0  )(
                    continuous = dotp;
                    glDepthFunc(GL_LESS);
                    glClearDepth(1.0);
                    glClear(GL_DEPTH_BUFFER_BIT);
                    glBegin(GL_TRIANGLES);(
                        glVertex3f(x0, y0, z0 );
                        glVertex3f(x1, y1, z1 );
                        glVertex3f(x2, y2, z2 );
                    }
                    glEnd();
                    //cout << "started" << endl;
                    continue;
                )
                else(
                    if{( continuous>0.0 &&dotp > 0.0)
                       || (continuous<0.0 &&dotp <0.0 ))(
                        //glDepthFunc(GL_LESS);
                        //glClearDepth(1.0);
                        //glClear(GL_DEPTH_BUFFER_BIT);
                        glBegin(GL_TRIANGLES); (
                            glVertex3f(x0, y0, z0 );
                            glVertex3f(x1, y1, z1 );
                            glVertex3f(x2, y2, z2 );
                        }
                        glEnd();
                        //cout << "next" << end1;
                        continue;
                    }
                }

#ifdef TAKE_PLUS_DOTPRODUCT
                    // if( dotp > 0 )
                    if( continuous > 0 )
#else
                    //if( dotp < 0 )
                    if( continuous < 0 )
```

**22**

```
      #endif
                              //if( extZ > 0 )
                              globalXrayDrawAction->collectFootPrint(-1);
                           else
                              globalXrayDrawAction->collectFootPrint(1);
                           ////cout << "finished footPrinting" << endl;
                           continuous = 0.0;
                           k--;
                  }
                  offset += length;
              }
          )


      else(
          if (t->isDerivedFrom(csTriFanSet::getClassType())){ // GeoSet
              //continue;

              csTriFanSet *triFanSet = (csTriFanSet*)geo;
              cout << "There are " << triFanSet->getPrimCount()
                << " triFans in the triFanSet." << endl;
              continue;
              //-----

              csMFInt *F = (csMFInt*)triFanSet->getField(csTriFanSet:: FAN_LENGTH )

              short offset = 0;
              csCoordSet3f *coord = (csCoordSet3f*)triFanSet->getCoordSet();
              csMFVec3f *mvec = coord->point(); // a geoSet has a coordSet.

              for(short j = 0; j < F->getCount(); j++ ) (// each stripSet
                  short length = F->get(j);// number of triangles +2
                  // cout << "#" << j << " triFan has "
                  //   << length << " points." << endl;

                  float x0,y0,z0, x1,y1,z1, x2,y2,z2;
                  csVec3f vec;
                  mvec->get(offset, vec );
                  vec.get(&x0,&y0,&z0);

                  for(short k = 0; k < length-2; k++ ) (
                     mvec->gat(offset+k+1, vec );
                     vec.get(&x1,&y1,&z1);
                     mvec->get(offset+k+2, vec );
                     vec.get(&x2,&y2,&z2);
                     //cout << "Vec #" << k << " \t"
                     // << x0 << " \t" << y0 << " \t" << z0 <<endl;

                     //glDepthFunc(GL_LESS);
                     //glClearDepth(1.0);
                     ////glClear(GL_DEPTH_BUFFER_BIT);// very slow!
                     glBegin(GL_TRIANGLES);{
                         glVertex3f( x0, y0, z0 );
                         glVertex3f( x1, y1, z1 );
                         glVertex3f( x2, y2, z2 );
                     )
                     glEnd();
                     //globalXrayDrawAction->collectFootPrint();
                  }
                  offset += length;
              }
          // cout << "\n" << F->getCount() << endl;

          )
```

```
      else
         cout << "else" << endl;
      }
   }
}
#endif
//%%%%%%%%%%%%%%%%%%%%%%%%%%%%%%%%%%%%%%%%%%%%%%%%%%%%%%%%
void opXrayDrawAction::collectFootPrint(short flag)
{
   //return;

   glReadPixels( 0, 0, w_win, h_win, GL_DEPTH_COMPONENT, GL_FLOAT, depthMin );
   // should be windowed
   glFlush();

   for( short i = 0; i < h_win; i++ )(
      for( short j=0; j< w_win; j++ ) (
         if( depthMin[i]][j] != 1.0 ) {
            /*    if( depthRange[i][j]+depth0[i][j] > 1.0) (
               depthRange[i][j] -= flag*depth0[i][j];
               depthRange[i][j] *= -1;                    )
               else*/
                  depthRange[i][j] += flag*depthMin[i][j];//-=
                  //cout << depthRange[i][j] << " << flag << endl;
         )
      )
   }
}
//%%%%%%%%%%%%%%%%%%%%%%%%%%%%%%%%%%%%%%%%%%%%%%%%%%%%%%%%%%%%
#pragma once

#include <Optimizer/opTraverse.h>
#include <Cosmo3D/csDrawAction.h>
#include "opXrayDrawImpl.h"

class opXrayViewer;

class opXrayDrawAction :
public opDFTravAction //, public csDrawAction

                        //opBFTravAction
                        //Hey!;
                        // *OP Fatal/SysErr: opBFTraverse not implemented.
{
protected:
   // csDrawAction* renderer;
   opXrayViewer *viewer;
   float depthMin[h_win][w_win];
   float depthMax[h_win][w_win];
   float depthRange[h_win][w_win];
   float accumulationImage[h_win][w_win];
   GLubyte pixels[h_win][w_win][3];
   short gotEyePoint;
   float mv[16];

public:
   //opTravDisp perNode ( csNode*&n, const opActionInfo& );
   virtual void begin ( csNode*&, const opActionInfo& );
   virtual opTravDisp preNode ( csNode*&, const opActionInio& );
   virtual opTravDisp postNode ( csNode*&, const opActionInfo& );
   virtual opActionDisp end ( csNode*&, const opActionInfo&);

   /*    void setRenderer( csDrawAction* ren )( renderer = ren; ) */
```

```
    void collectFootPrint(short flag);

    void setViewer(opXrayViewer *v ) { viewer = v; )

    //static short tmpcount;
};
#include "opXrayDrawImpl.h"
#include "opXrayViewer.h"

void opXrayDrawImpl::draw (unsigned frame)
{
    //%%%%%%%%%%%%%%%%%%%%%%%%%%%%%%%%%%%%%%%%%%%%%%%%%%%%%%%%%%%%%%
#if 1
    viewer->clearWindow();

    viewer->projection();
    viewer->modelView();
    ((opXrayViewer*)viewer)->drawXrayScene();

    viewer->drawStatistics();
    viewer->swapBuffers();

#endif
    //%%%%%%%%%%%%%%%%%%%%%%%%%%%%%%%%%%%%%%%%%%%%%%%%%%%%%%%%%%%%%%
#if 0
    // cout << "draw called\n";
    glClear( GL_COLOR_BUFFER_BIT );
    static double red = 0.0;
    glClearColor( 0.0, 0.0 , red, 0.5 );
    red += 0.01;
    if( red > 1.0) red = 0.0;
    glFlush();
    viewer->swapBuffers();

#endif
    //%%%%%%%%%%%%%%%%%%%%%%%%%%%%%%%%%%%%%%%%%%%%%%%%%%%%%%%%%%%%%%
#if 0
    //************************************************
    viewer->clearWindow();

    (
    viewer->projection();
    viewer->modelView();
    // ((opXrayViewer*)viewer)->drawXrayScene();

}
 //************************************************
    glEnable( GL_DEPTH_TEST );
    glDepthFunc(GL_LESS);
    glClearDepth(1.0);
 glClear(GL_DEPTH_BUFFER_BIT);

    //DrawScene();
    ((opXrayViewer*)viewer)->drawXrayScene();

    glReadPixels( 0, 0, w_win, h_win, GL_DEPTH_COMPONENT, GL_FLOAT, depth0 );

    //************************************************
    glDepthFunc(GL_GREATER);
    glClearDepth(0.0);
    glClear(GL_DEPTH_BUFFER_BIT);
```

```
    //DrawScene();
     ((opXrayViewer*)viewer)->drawXrayScene();
 glReadPixels( 0, 0, w_win, h_win, GL_DEPTH_COMPONENT, GL_FLOAT, depth1 );

    //**************************************************
    short i, j;
    for ( i = 0; i < (h_win); i++ )
        for( j=0; j< w_win; j++ )
            {
            if( depth1[i][j] != 0.0 && depth0[i][j] != 1.0 && depth0[i][j]<depth1
                depthRange[i][j] = dapth1[i][j] - depth0[i][j];
            else
                depthRange[i][j] = 0.0;

            //cout << j << " " << i << endl;
            //cout << depeh0[i][j] << endl;
            //                      cout << depthl[i][j] << endl;
            //                      cout << depthRange[i][j] << endl << endl;

            // if( depthRange[i][j] != 0 )
            //        printf("%f\n", depthRange[i][j] );

            // pixels[i][j][0] = pixels[i][j][1] = pixels[i][j][2] = 255-exp(-50.0
            pixels[i][j][0] = pixels[i][j][1] = pixels[i][j][2]
                = 255-exp(-50.01*depthRange[i][j])*255;

            //cout << pixels[i][j][0];
            // printf("%d, %d, %f\n", i, j, exp(-0.2*depthRange[i][j]) );
        }

    //**************************************************
    glDisable(GL_DEPTH_TEST );

    //glDrawPixels(w_win, h_win, GL_RGB, GL_UNSIGNED_BYTE, pixels );
    //glDrawPixels(w_win, h_win, GL_RGB, GL_UNSIGNED_BYTE, pixels );
    glDrawPixels(w_win, h_win, GL_RGB, GL_UNSIGNED_BYTE, pixels );
    //glFlush();

    //   glutSwapEuffers();

    //**************************************************
    viewer->drawStatistics();
    viewer->swapBuffers();
    #endif
    //%%%%%%%%%%%%%%%%%%%%%%%%%%%%%%%%%%%%%%%%%%%%%%%%%%%%%%%%%%%%%
    )
    #pragma once

    #include <iostream.h>

    #include <Optimizer/opDefDrawImpl.h>
    #include <GL/gl.h>

    bool keyHandlerl (opDrawImpl *di,int key);

    //#define w_win 500
    //#define h_win 500
    #define w_win 400
    #define h_win 400

    class opXrayDrawImpl : public opDefDrawImpl
    {
    private:
```

```
        GLfloat depth0[h_win][w_win];
        GLfloat depth1[h_win][w_win];
        GLfloat depthRange[h_win][w_win];
        GLfloat accumulationImage[h_win][w_win]
        GLubyte pixels[h_win][w_win][3];
public:

        opXrayDrawImpl(opViewer *viewer ): opDefDrawImpl( viewer )
            {
                cout << "xrayDrawImpl created" << endl;
                registerKey('x', keyHandler1, "Toggle Xray mode");

            );

    virtual void draw (unsigned frame);
);
    // #include <iostream.h>

    #include <Cosmo3D/csTransform.h>

    #include "opXrayViewer.h"
    #include "opXrayDrawImpl.h"
    #include "opXrayDrawAction.h"

    float gEyeX, gEyeY, gEyeZ;

    //%%%%%%%%%%%%%%%%%%%%%%%%%%%%%%%%%%%%%%%%%%%%%%%%%%%%%%%%%%%%
    bool keyHandlerl(opDrawImpl *di,int key)
        //bool opXrayDrawImpl::keyHandler(int key)
    (
        printf("Key = %d (%c)\n",key,key);

    // opXrayDrawImpl *d = (opXrayDrawImpl")di;
    opXrayViewer *viewer = (opXrayViewer*)di->getViewer();

    if (key=='x')
    (
        viewer->toggleDrawImpl(di);
    )
    return true;
)
//%%%%%%%%%%%%%%%%%%%%%%%%%%%%%%%%%%%%%%%%%%%%%%%%%%%%%%%%%%%%%%%

    void opXrayViewer::drawXrayScene ()//csNode* alt_root=NULL)
    (
        // cout << "drawXrayScene called" << endl;
        // glMatrixMode(GL_MODELVIEW);
        // glLoadIdentity();
    // light1->draw();
    // light2->draw();
        // glViewport{ 0, 0, width, height );
    //      {
    //          context->setPolyMode(csContext::FILL_PMODE);
    //          if ( opGlobal::capablel opAaLines ) )
    //          {
    //          context->setTranspEnable( false );
    //          context->setTranspMode(csContext::NICE_TRANSP );
    //          context->setSrcBlendFunc(csContext::ONE_SBLEND);
    //          context->setDstBlendFunc( csContext::ZERO_DBLEND );
    //          glDisable( GL_LINE_SMOOTH );
    //          )
    //      }
```

```
//        drawAction->apply(root);

//glShadeModel (GL_FLAT );

// xrayDrawAction.setRenderer(drawAction );

csFloat vx, vy, vz;
csCamera* camera = getCamera();
camera->getPosition( &vx, &vy, &vz );
//xrayDrawAction.setViewPoint(vx, vy, vz );
cout << "camera at " << vx << " " << vy << " " << vz << endl;
cout << tx << " " << ty << " " << tz << " translation" << endl;

getViewPoint( gEyeX, gEyeY, gEyeZ );
cout << gEyeX << " " << gEyeY << " " << gEyeZ << endl;

xrayDrawAction.setViewer(this)
xrayDrawAction.opDFTravAction::apply(root);
//xrayDrawAction.csDrawAction::apply(root);

}
//%%%%%%%%%%%%%%%%%%%%%%%%%%%%%%%%%%%%%%%%%%%%%%%%%%%%%%%%%%%%%%%
void opXrayViewer::getViewPoint(float &x, float &y, float &z)
{

pose->getTranslation(&x, &y, &z);
// pose->getRotation(&rx, &ry, &rz );

floac mv[16];
glGetFloatv(GL_MODELVIEW_MATRIX, mv );
for( short i = 0; i<16; i++ )
    cout << i << "\t" << mv[i] << endl;
}
//%%%%%%%%%%%%%%%%%%%%%%%%%%%%%%%%%%%%%%%%%%%%%%%%%%%%%%%%%%%%%%%
#pragma once

#include <iostream.h>

#include <Optimizer/opViewer.h>

#include "opXrayDrawImpl.h"
#include "opXrayDrawAction.h"

class opXrayViewer : public opViewer
(
protected:
  opXrayDrawImpl* xrayDrawImpl;
  opDrawImpl* defaultDrawImpl;
  opXrayDrawAction xrayDrawAction;

public:
  opXrayViewer(
               const char* windowTitle="unnamed", int x=0, int y=0, int w=512, int
               int keyTableSize=512)
  : opViewer( windowTitle, x, y, w, keyTableSize)
  (
      xrayDrawImpl = new opXrayDrawImpl(this);
      cout << "xrayDrawImpl " << xrayDrawImpl << endl;
  };

  void drawXrayScane ();

  void rememberDefaultDrawImpl()
```

```
    (
        defaultDrawImpl = getDrawImpl();
        cout << "Remembered: " << defaultDrawImpl << endl;
    )

     opDrawImpl* gatDefaultDrawImpl()
    {
        return defaultDrawImpl;
    }

     void toggleDrawImpl(opDrawImpl* di)
    (
            cout << "toggling " << di << endl;

            di = getDrawImpl();

            if{ di == getDefaultDrawImpl() }
                    setDrawImpl( xrayDrawImpl );
                    cout << "xrayDrawImpl" << endl;
        }
      else
      {
                    setDrawImpl( defaultDrawImpl );
                    cout << "defaultDrawImpl" << endl;
        }
    }

    void getViewPoint(float &x, float &y, float &z);
 };
```

Having now described a few embodiments of the invention, it should be apparent to those skilled in the art that the foregoing is merely illustrative and not limiting, having been presented by way of example only. Numerous modifications and other embodiment are within the scope of one of ordinary skill in the art and more contemplated as falling within the scope of the invention as defined by the appended claims and equivalents thereto.

## Claims

1. An object rendering system (10) for converting a material and geometric description of an object into an X-Ray like image (74) of said object, comprising:

    means (40, 42, 44, 46, 50, 52) for simulating passing an X-Ray beam through said object, with said beam having simulated photons;
    means (60, 62, 64, 156) for simulating the attenuation of said simulated X-Ray beam as it passes through said object;
    means (66, 68, 70, 72, 162) responsive to the attenuation of said simulated X-Ray beam for rendering said object in an X-Ray format, whereby objects may be presented to an observer in a manner similar to what the observer would see if said object were X-rayed;
    means for decomposing said object into a number of nested solids (14, 16, 18) having nested surfaces defined by boundaries, each of said nested solids (14, 16, 18) having a predetermined mass attenuation coefficient; and
    means (20, 22, 24) for establishing the boundaries of said nested solids including means for providing a 3D model of said nested solids, said 3D model including predetermined features of said object at interior locations thereof,

    said means for simulating passing an X-Ray beam through said object including means for simulating passing said simulated X-Ray beam through at least one of said nested solids, wherein each of said nested solids is rendered (42, 44, 46) independently
    **characterized by**
    means (88, 98, 100, 102, 104, 138) for determining if said beam is entering or exiting a nested object and means (140) responsive thereto for determining the presence of a void along the path of said beam,

wherein said means for determining if said beam is entering or exiting a nested object includes means (138) for establishing a surface normal vector (98, 100, 102, 104) at a point where said beam enters or exits said nested solid, said surface normal vector having a magnitude corresponding to the number of unattenuated photons associated with said beam and a direction corresponding to the direction of simulated photons scattered at said point from said simulated beam, and for establishing an eye vector (88) having direction in the direction of said beam and a magnitude equal to the distance between the source of said beam and the point where said beam enters or exits said nested solid.

2. The system of Claim 1, wherein said void determining means includes a pixel at the point on the surface of a nested object where said beam enters or exits, and means for computing the dot product of said surface normal vector with said eye vector for establishing whether said beam is entering or exiting said surface.

3. The system of Claim 1, further including means (26, 28, 30) for adjusting the mass attenuation coefficient of each of said nested solids.

4. The system of Claim 1, and further including means (38, 40) for registering said 3D model in a 3D coordinate system that includes a simulated X-Ray photon emitter, the boundaries of said nested solids and a scene graph which relates all objects in a scene that includes said nested solids.

5. The system of Claim 1, wherein said 3D model is manually formed.

6. The system of Claim 1, wherein said 3D model is obtained from a CT scan of a real physical object.

7. A method of converting a material and geometric description of an object into an X-Ray like image (74) of said object comprising the steps of:

   providing (12) a 3D model of nested solids corresponding to nested portions of said object; digitizing (20, 22, 24) said solids to provide surfaces corresponding to each of said nested solids;
   assigning (26, 28, 30) mass attenuations to the solids bounded by each of said surfaces and assigning a corresponding mass attenuation characteristic to the associated surface, said surfaces forming nested shells (32, 34, 36), each having a predetermined mass attenuation characteristic associated therewith;
   positionally (38) registering said shells in a scene graph to provide a registered shell geometry (40) for relating the surface geometries of said shells together;
   passing (50, 52) a simulated X-Ray beam through said material and geometric description of said object while attenuating said simulated X-Ray beam according to said mass attenuation coefficients and said mass attenuation characteristics;
   rendering (42, 44, 46) said shells independently to obtain the path length of the solid bounded by said shells that the beam goes through, so as to provide a depth image picture (54, 56, 58) of each of said shells, thus to indicate the distance traversed by a given ray of said beam through the corresponding solid;
   combining each of said depth shell images with associated mass attenuation coefficients by computing the attenuation image (60, 62, 64) for each shell using the corresponding mass attenuation coefficient, thus to provide shell attenuation images (66, 68, 70) shaded to indicate the density thereof; and
   combining (72) said shaded attenuation images to provide a combined simulated X-Ray image (74) having the nested solids depicted thereat

   **characterized by**
   determining if said beam is entering or exiting a nested object and in response thereto determining the presence of a void along the path of said beam;
   establishing (138) a surface normal vector (98, 100, 102, 104) at a point where said beam enters or exits said nested solid, said surface normal vector having a magnitude corresponding to the number of unattenuated photons associated with said beam and a direction corresponding to the direction of simulated photons scattered at said point from said simulated beam; and
   establishing an eye vector (88) having direction in the direction of said beam and a magnitude equal to the distance between the source of said beam and the point where said beam enters or exits said nested solid.

8. The method of Claim 7, wherein said void determination includes a pixel at the point on the surface of a nested object where said beam enters or exits, and wherein the dot product of said surface normal vector with said eye vector is computed for establishing whether said beam is entering or exiting said surface.

9. The method of Claim 7, wherein said rendering step includes the steps or providing a predetermined X-Ray beam description and a predetermined camera description, and calculating the rendered path lengths using said X-Ray beam description and said camera description.

**Patentansprüche**

1. Objektwiedergabesystem (10) zum Umwandeln eines Materials und einer geometrischen Beschreibung eines Objekts in ein röntgenähnliches Bild (74) des Objekts, welches aufweist:

Mittel (40, 42, 44, 46, 50, 52) zum Nachahmen des Durchgangs eines Röntgenstrahls durch das Objekt, wobei der Strahl simulierte Photonen hat;

Mittel (60, 62, 64, 156) zum Nachahmen der Dämpfung des simulierten Röntgenstrahls, wenn er durch das Objekt hindurchgeht;

Mittel (66, 68, 70, 72, 162), die auf die Dämpfung des simulierten Röntgenstrahls ansprechen zur Wiedergabe des Objekts in einem Röntgenformat;

wodurch Objekte einem Beobachter in einer Weise präsentiert werden können, die ähnlich der is, die der Beobachter sehen würde, wenn das Objekt Röntgenstrahlen ausgesetzt wäre;

Mittel zum Zersetzen des Objekts in eine Anzahl von verschachtelten festen Körpern (14, 16, 18) mit verschachtelten Oberflächen, die durch Grenzen definiert sind, wobei jeder der verschachtelten festen Körper (14, 16, 18) einen vorbestimmten Massendämpfungskoeffizienten hat; und

Mittel (20, 22, 24) zum Errichten der Grenzen der verschachtelten festen Körper enthaltend Mittel zum Vorsehen eines 3D-Modells der verschachtelten festen Körper, welches 3D-Modell vorbestimmte Merkmale des Objekts an inneren Stellen von diesem enthält, welche Mittel zum Nachahmen des Durchgangs eines Röntgenstrahls durch das Objekt Mittel zum Nachahmen des Durchgangs des simulierten Röntgenstrahls durch zumindest einen der verschachtelten festen Körper enthalten, wobei jeder der verschachtelten festen Körper unabhängig wiedergegeben wird (42, 44, 46),

**gekennzeichnet durch**

Mittel (88, 98, 100, 102, 104, 138) zum Bestimmen, ob der Strahl in ein verschachteltes Objekt eintritt oder aus diesem austritt, und Mittel (140), die hierauf ansprechen, um die Anwesenheit eines Hohlraums entlang des Pfades des Strahls zu bestimmen,

wobei die Mittel zum Bestimmen, ob der Strahl in ein verschachteltes Objekt eintritt oder aus diesem austritt, Mittel (138) zum Errichten eines Oberflächennormalenvektors (98, 100, 102, 104) an einem Punkt, an dem der Strahl in den verschachtelten festen Körper eintritt oder diesen verlässt, enthalten, welcher Oberflächennormalenvektor eine Größe entsprechend der Anzahl von ungedämpften Photonen, die mit den Strahl assoziiert sind, und eine Richtung entsprechend der Richtung von simulierten Photonen, die an diesem Punkt von dem simulierten Strahl verstreut sind, hat, sowie zum Errichten eines Augenvektors (88) mit einer Richtung in der Richtung des Strahls und einer Größe gleich dem Abstand zwischen der Quelle des Strahls und dem Punkt, an dem der Strahl in den verschachtelten festen Körper eintritt oder diesen verlässt, enthalten.

2. System nach Anspruch 1, bei dem die den Hohlraum bestimmenden Mittel ein Pixel an dem Punkt auf der Oberfläche eines verschachtelten Objekts, an dem der Strahl eintritt oder austritt, und Mittel zum Berechnen des Punktprodukts des Oberflächennormalenvektors mit dem Augenvektor zur Feststellung, ob der Strahl in die Oberfläche eintritt oder aus dieser austritt, enthalten.

3. System nach Anspruch 1, weiterhin enthaltend Mittel (26, 28, 30) zum Einstellen des Massendämpfungskoeffizienten jedes der verschachtelten festen Körper.

4. System nach Anspruch 1, weiterhin enthaltend Mittel (38, 40) zum Registrieren des 3D-Modells in einem 3D-Koordinatensystem, das einen nachgeahmten Röntgenstrahlen-Photonenemitter, die Grenzen der verschachtelten festen Körper und ein Szenegraph, das sich auf alle Objekt in einer Szene, die die verschachtelten festen Körper enthält, bezieht, enthalten.

5. System nach Anspruch 1, bei dem das 3D-Model manuell gebildet ist.

6. System nach Anspruch 1, bei dem das 3D-Modell aus einer CT-Abtastung eines realen körperlichen Objekts erhalten ist.

**7.** Verfahren zum Umwandeln eines Materials und einer geometrischen Beschreibung eines Objekts in ein röntgenartiges Bild (74) des Objekts, welches die Schritte aufweist:

Vorsehen (12) eines 3D-Modells von verschachtelten festen Körpern entsprechend verschachtelten Bereichen des Objekts;

Digitalisieren (20, 22, 24) der festen Körper, um Oberflächen entsprechend jedem der verschachtelten festen Körper vorzusehen;

Zuweisen (26, 28, 30) von Massendämpfungen zu den festen Körpern, die durch jede der Oberflächen begrenzt sind, und Zuweisen einer entsprechenden Massendämpfungscharakteristik zu der assoziierten Oberfläche, wobei die Oberflächen verschachtelte Schalen (32, 34, 36) bilden, von denen jede eine hiermit assoziierte vorbestimmte Massendämpfungscharakteristik hat; positionsmäßiges (38) Registrieren der Schalen in einem Szenegraph, um eine registrierte Schalengeometrie (40) vorzusehen für die gegenseitige Inbeziehungsetzung der Oberflächengeometrien der Schalen;

Hindurchführen (50, 52) eines simulierten Röntgenstrahls durch das Material und die geometrische Beschreibung des Objekts, während der simulierte Röntgenstrahl gemäß den Massendämpfungskoeffizienten und den Massendämpfungscharakteristiken gedämpft wird;

unabhängiges Wiedergeben (42, 44, 46), der Schalen, um die Pfadlänge des durch die Schalen, durch die der Strahl hindurchgeht, begrenzten festen Körpers zu erhalten, um ein Tiefenbild (54, 56, 58) jeder der Schalen vorzusehen, wodurch der von einem gegebenen Strahl durch den entsprechenden festen Körper zurückgelegte Abstand angezeigt wird;

Kombinieren jedes der Schalentiefenbilders mit assoziierten Massendämpfungskoeffizienten durch Berechnen des Dämpfungsbildes (60, 62, 64) für jede Schale unter Verwendung des entsprechenden Massendämpfungskoeffizienten, um hierdurch schattierte Schalendämpfungsbilder (66, 68, 70) für die Anzeige von deren Dichte zu erhalten; und

Kombinieren (72) der schattierten Dämpfungsbilder, um ein kombiniertes simuliertes Röntgenbild (74) mit darin dargestellten verschachtelten festen Körpern vorzusehen,

**gekennzeichnet durch**

Bestimmen, ob der Strahl in ein verschachteltes Objekt eintritt oder aus diesem austritt, und in Abhängigkeit hiervon Bestimmen der Anwesenheit eines Hohlraums entlang des Pfades des Strahls; Errichten (138) eines Oberflächennormalenvektors (98, 100, 102, 104) an einem Punkt, an dem der Strahl in den verschachtelten festen Körper eintritt oder aus diesem austritt, welcher Oberflächennormalenvektor eine Größe entsprechend der Anzahl von ungedämpften Photonen, die mit dem Strahl assoziiert sind, und eine Richtung entsprechend der Richtung von simulierten Photonen, die an dem Punkt von dem simulierten Strahl zerstreut sind, hat; und

Errichten eines Augenvektors (88) mit einer Richtung in der Richtung des Strahls und einer Größe gleich dem Abstand zwischen der Quelle des Strahls und dem Punkt, an dem der Strahl in den verschachtelten festen Körper eintritt oder aus diesem austritt.

**8.** Verfahren nach Anspruch 7, bei dem die Hohlraumbestimmung ein Pixel an dem Punkt auf der Oberfläche eines verschachtelten Objekts, an dem der Strahl eintritt oder austritt, enthält, und bei dem das Punktprodukt des Oberflächennormalenvektors mit dem Augenvektor berechnet wird für die Feststellung, ob der Strahl in die Oberfläche eintritt oder aus dieser austritt.

**9.** Verfahren nach Anspruch 7, bei dem der Wiedergabeschritt die Schritte des Vorsehens einer vorbestimmten Röntgenstrahlenbeschreibung und einer vorbestimmten Kamerabeschreibung und des Berechnens der wiedergegebenen Pfadlängen unter Verwendung der Röntgenstrahlenbeschreibung und der Kamerabeschreibung enthält.

**Revendications**

**1.** Système de rendu d'objet (10) pour convertir une description matérielle et géométrique d'un objet en une image analogue de rayons X (74) dudit objet, comprenant :

des moyens (40, 42, 44, 46, 50, 52) pour simuler le passage d'un faisceau de rayons X à travers ledit objet, avec ledit faisceau contenant des photons simulés;

des moyens (60, 62, 64, 156) pour simuler l'atténuation dudit faisceau de rayons X simulé à mesure qu'il traverse ledit objet;

des moyens (66, 68, 70, 72, 162) sensibles à l'atténuation dudit faisceau simulé à rayons X pour le rendu dudit objet au format de rayons X, de sorte que les objets puissent être présentés à un observateur d'une manière similaire à ce que l'observateur pourrait voir si lesdits objets étaient irradiés par rayons X;

des moyens pour décomposer ledit objet en un certain nombre de solides imbriqués (14, 16, 18) ayant des surfaces imbriqués définies par des limites, chacun des solides imbriqués (14, 16, 18) ayant un coefficient d'atténuation de masse prédéterminé; et

des moyens (20, 22, 24) pour établir les limites desdits solides imbriqués comprenant un moyen pour fournir un modèle en 3D desdits solides imbriqués, ledit modèle en 3D comprenant des caractéristiques prédéterminées dudit objet à ses emplacements intérieurs, ledit moyen pour simuler un passage d'un faisceau de rayons X à travers ledit objet comprenant un moyen pour simuler un passage dudit faisceau simulé de rayons X à travers au moins l'un desdits solides imbriqués, dans lesquels chacun desdits solides imbriqués est rendu (42, 44, 46) indépendamment,

**caractérisé par**

des moyens (88, 98, 100, 102, 104, 138) pour déterminer si ledit faisceau entre ou sort d'un objet imbriqué et des moyens (140) qui lui sont sensibles pour déterminer la présence d'un vide le long d'un trajet dudit faisceau,

dans lequel ledit moyen pour déterminer si ledit faisceau entre ou sort d'un objet imbriqué comprend un moyen (138) pour établir un vecteur normal de surface (98, 100, 102, 104) en un point où ledit faisceau entre ou sort dudit solide imbriqué, ledit vecteur normal de surface ayant une grandeur correspondant au nombre de photons non atténués associé audit faisceau et une direction correspondant à la direction des photons simulés dispersés audit point dudit faisceau simulé, et pour établir un vecteur oculaire (88) ayant une direction dans la direction dudit faisceau et une grandeur égale à la distance entre la source dudit faisceau et le point où ledit faisceau entre ou sort dudit solide imbriqué.

2.  Système selon la revendication 1, dans lequel ledit moyen de détermination d'un vide comprend un pixel au point de la surface d'un solide imbriqué où ledit faisceau entre ou sort, et un moyen pour calculer le produit scalaire dudit vecteur normal de surface avec ledit vecteur oculaire pour établir si ledit faisceau entre ou sort de ladite surface.

3.  Système selon la revendication 1, comprenant en outre un moyen (26, 28, 30) pour régler le coefficient d'atténuation de masse de chacun desdits solides imbriqués.

4.  Système selon la revendication 1, et comprenant en outre des moyens (38, 40) pour enregistrer ledit modèle en 3D dans un système de coordonnées en 3D qui comprend un émetteur de photons simulé aux rayons X, les limites desdits solides imbriqués et un graphique scénique qui met en relation tous les objets dans une scène qui comprend lesdits solides imbriqués.

5.  Système selon la revendication 1, dans lequel ledit modèle en 3D est formé manuellement.

6.  Système selon la revendication 1, dans lequel ledit modèle en 3D est obtenu à partir d'un balayage CT d'un objet physique réel.

7.  Procédé de conversion d'une description matérielle et géométrique d'un objet dans une image analogue de rayons X (74) dudit objet comprenant les étapes de :

    fourniture (12) d'un modèle de solides imbriqués correspondant aux parties imbriqués dudit objet,

    numérisation (20, 22, 24) desdits solides pour fournir des surfaces correspondant à chacun desdits solides imbriqués;

    attribution (26, 28, 30) d'atténuations de masse aux solides délimités par chacune desdites surfaces et attribution d'une caractéristique d'atténuation de masse correspondante à la surface associée, lesdites surfaces formant des enveloppes imbriquées (32, 34, 36), chacune contenant une caractéristique d'atténuation de masse prédéterminée associée,

    enregistrement (38) des positions desdites enveloppes dans un graphique scénique pour fournir une géométrie d'enveloppe enregistrée (40) pour relier les géométrie de surface dédites enveloppes ensemble;

    passage (50, 52) d'un faisceau simulé de rayons X à travers ladite description matérielle et géométrique dudit objet tout en atténuant ledit faisceau de rayons X simulé selon lesdits coefficients d'atténuation de masse et lesdites caractéristiques d'atténuation de masse;

    rendu (42, 44, 46) desdites enveloppes indépendamment pour obtenir la longueur de trajet du solide délimité par lesdites enveloppes que le faisceau traverse, afin de fournir une image en profondeur (54, 56, 58) de chacune dédites enveloppes, pour indiquer ainsi que la distance parcourue par un rayon donné dudit faisceau à travers le solide correspondant;

combinaison de chacune dédites images d'enveloppes en profondeur avec des coefficients d'atténuation de masse associés par calcul de l'image d'atténuation (60, 62, 64) pour chacune des enveloppes en utilisant le coefficient d'atténuation de masse, pour produire ainsi des images d'atténuation d'enveloppes (66, 68, 68) grisées pour indiquer leur densité, et

combinaison (72) desdites images d'atténuation grisées pour fournir une image de rayons X simulée combinée (74) ayant les solides imbriqués décrits,

**caractérisé par**

la détermination si ledit faisceau entre ou sort dans l'objet imbriqué et, en fonction de la détermination précédente, la détermination de la présence d'un vide le long du trajet dudit faisceau;

l'établissement (138) d'un vecteur normal de surface (98, 100, 102, 104) en un point où ledit faisceau entre ou sort dudit solide imbriqué, ledit vecteur normal de surface ayant une grandeur correspondant au nombre de photons non atténués associés audit faisceau et une direction correspondant à la direction des photons simulés dispersés audit point dudit faisceau simulé, et l'établissement d'un vecteur oculaire (88) ayant une direction dans la direction dudit faisceau et une grandeur égale à la distance entre la source dudit faisceau et le point où ledit faisceau entre ou sort dudit solide imbriqué.

8. Procédé selon la revendication 7, dans lequel ladite détermination du vide comprend un pixel au point de la surface d'un solide imbriqué où ledit faisceau entre ou sort, et dans lequel le produit scalaire dudit vecteur normal de surface avec ledit vecteur oculaire est calculé pour établir si ledit faisceau entre ou sort de ladite surface.

9. Procédé selon la revendication 7, dans lequel ladite étape de rendu comprend les étapes ou la fourniture d'une description prédéterminée de faisceau de rayons X et d'une description prédéterminée de caméra et le calcul des longueurs de trajet de rendu utilisant ladite description de faisceau de rayons X et ladite description de caméra.

FIG. 1A

EP 0 967 578 B1

*FIG. 1B*

EP 0 967 578 B1

FIG. 2

37

Start — 120

Get Beam Intensity Image (I0). — 122

Set Pixel Values in the Accumulation Image to the values in I0. — 124

For each Solid to be rendered (i) — 126

G ← | F

Set pixel values in the range image (R) to 0 — 128

Get the boundary representaion for object i — 130

Get the mass-attenuation coefficient for object i (mu) — 132

A

A

For each boundary patch (j) — 134

E ←

For each pixel that projects onto the boundary patch (k) — 136

D

Get the normal vector (nv) for this point on the boundary patch — 138

Get the dot product of the eye vector and nv (dp) — 140

dp = 0 ? — 142

Yes

no

Compute the distance from the focal point to the boundary point (d) — 144

B

C

*FIG. 3A*

B

Set the sign of d to the opposite of the sign of dp — 146

Increment the pixel value in R at location k by d — 148

C → Continue → D — 150

# FIG. 3B

G

Display the accumulation image — 162

End — 164

# FIG. 3C

E

F ← For Each Pixel in the accumulation image (m) — 152

get pixel value from R at m (x) — 154

compute attenuation value (a) equals exp(-mu*x) — 156

multiply accumulation image pixel at location m by a. — 158

Continue — 160

# FIG. 3D